(19) Europäisches Patentamt

European Patent Office

Office européen des brevets

(11) Publication number: **0 206 255 B1**

# EUROPEAN PATENT SPECIFICATION

(45) Date of publication of patent specification: **18.12.91**  (51) Int. Cl.⁵: **G11B 20/10, G11B 5/008**

(21) Application number: **86108344.2**

(22) Date of filing: **19.06.86**

(54) PCM audio signal recording and/or reproducing apparatus.

(30) Priority: **20.06.85 JP 135184/85**

(43) Date of publication of application:
**30.12.86 Bulletin 86/52**

(45) Publication of the grant of the patent:
**18.12.91 Bulletin 91/51**

(84) Designated Contracting States:
**AT DE FR GB NL**

(56) References cited:
**EP-A- 0 085 578**
**EP-A- 0 102 600**
**GB-A- 2 030 755**

**GRUNDIG TECHNISCHE INFORMATIONEN,
vol. 28, no. 3, 1981, pages 119-128, Regens-
burg; F. MEIERHÖFER "Das Bedienteil und
die Uhr des Grundig-Videorecorders Video
2x4 Super"**

(73) Proprietor: **SONY CORPORATION
7-35 Kitashinagawa 6-Chome Shinagawa-ku
Tokyo 141(JP)**

(72) Inventor: **Oguro, Masaki
c/o Sony Corporation 7-35, Kitashinagawa
6-chome
Shinagawa-ku Tokyo(JP)**

(74) Representative: **Schmidt-Evers, Jürgen,
Dipl.-Ing. et al
Patentanwälte Dipl.-Ing. H. Mitscherlich
Dipl.-Ing. K. Gunschmann Dipl.-Ing.
Dr.rer.nat. W. Körber Dipl.-Ing. J. Schmidt-
Evers Dipl.-Ing. W. Melzer
Dipl.-Phys.Dr.rer.na
t. R. Schulz, Postfach 260132, D-8000 Mün-
chen 26(DE)**

## Description

Field of the Invention

This invention relates to an apparatus for recording and/or reproducing, for example, a PCM (pulse code modulated) audio signal by using a rotary head so as to form skewed tracks on a tape.

Description of the Prior Art

It is well known in the prior art that a plurality of broadcasting programs such as FM (frequency modulated) audio broadcasting programs and television broadcasting programs, each having a different broadcast time, are sequentially recorded by an audio tape recorder or a video tape recorder (VTR) by using a timer incorporated therein.

In this case, both in the audio tape recorder and the video tape recorder, the recording mode thereof becomes such a recording mode that a plurality of broadcast programs are sequentially and successively recorded on the tape along its longitudinal direction (hereinafter simply referred to as a series recording mode).

By the way, in the case of a so-called audio 8-track cassette tape, 8 recording tracks are arranged in parallel to one another in the widthwise direction of the tape (hereinafter simply referred to as a parallel recording mode). However, such a recording and/or reproducing apparatus is not yet available on the market that a plurality of broadcast programs scheduled to be recorded by a timer (hereinafter simply referred to as timer scheduled broadcast programs) are sequentially recorded on these 8 parallel tracks in the sequential order of scheduled broadcast times at every track.

EP 102 600 A2 discloses an apparatus for magnetic recording and reproducing in which time-compressed audio PCM signals are recorded in using a helical scan type magnetic recording head. The tape is divided in a number of N information tracks disposed in parallel to the tape running direction. This apparatus is capable to perform only a series recording mode in which the recording is carried on the segment track of one channel. It also provides an auto-reverse mode in which after recording a first track the tape may be rewound while information is recorded in a second track.

In the case of the above mentioned series recording mode or system, there is an advantage that the plurality of broadcast programs recorded by using the timer can be viewed successively. On the contrary, this series recording system has a defect below. That is, when only each of the recorded broadcast programs is viewed, the playback start point of the corresponding program must be detected (random access operation must be carried out). Further, since for all of the plurality of programs there is only the recording time having a duration of one tape, if the program to be recorded is long in time duration, the number of the programs to be recorded by the timer scheduled event recording system is restricted by the tape length.

On the other hand, in the case of the parallel recording mode, if the timer scheduled recording is possible, the recording of each program is recorded from the end portion of the tape in its longitudinal direction so that upon playback, the random access operation to detect the playback start portion of the program becomes unnecessary. Further, since for each program the time period corresponding to the length of the tape can be used, regardless of the duration of the program to be recorded, it becomes possible to record the program the number of which is at least the number of the tracks in the timer scheduled event recording mode. In addition, there is further advantage that musical programs can be recorded at every track featuring respective musical genres, such as Jazz music, classical music and so on.

Whereas, since in the parallel recording mode the plurality of programs can not be recorded continuously on one track unlike the series recording mode, upon playback mode, the tape must be rewound at every program and then the program can not be viewed successively.

In addition, there is known no such recording and/or reproducing apparatus at all which can carry out the timer scheduled recording in the parallel recording system.

## OBJECTS AND SUMMARY OF THE INVENTION

Accordingly, it is an object of this invention to provide an improved PCM (pulse code modulated) audio signal recording and/or reproducing apparatus.

It is another object of this invention to provide a PCM audio signal recording and/or reproducing apparatus which can selectively carry out a series recording system and/or a parallel recording system.

It is further object of this invention to provide a PCM audio signal recording and/or reproducing apparatus which can carry out a recording scheduled by a timer in both the series recording system and the parallel recording system.

According to the present invention there is provided a PCM audio signal and video signal recording and/or reproducing apparatus in which each of a plurality of recording tracks formed by a rotary head (1, HA, HB) scanning across a magnetic tape (2) is divided by an integer n greater than 1 in the longitudinal direction thereof to thereby form n track areas in each track corresponding to n channels, respectively, and in which an information signal can be recorded in and/or reproduced from each track area of each of said channels; said PCM audio signal and video signal recording and/or reproducing apparatus comprising:

timer means (32, 33) for scheduling starting and ending times for a plurality of successively occuring audio events, said timer means including memory means for storing data concerning said successively occuring audio events including said starting and ending times; and

means for selectively establishing one of a first audio recording mode in which said plurality of audio events are recorded temporally and spatially in series, between the respective scheduled starting and ending times, in track areas corresponding to only one of said n channels automatically, but are not recorded or specified in different track channel areas at any event, a second audio recording mode in which said audio events are recorded temporally in series and spatially in parallel automatically, between the respective scheduled starting and ending times, in track areas respectively corresponding to ones of said n channels which are different from each other and are all recorded from the top of the tape in said selected track areas, and a normal recording mode in which one audio event is recorded on only one of said channels and a video signal is recorded on other channels of said n channels, wherein said PCM audio signal and video signal recording and/or reproducing apparatus further comprises switch means (30) for selectively establishing said recording modes, said switch means (30) being adapted to be changed-over among positions corresponding to said first, said second and said normal recording mode, said data previously stored in said memory means being erased in response to change-over of said switch means between said positions.

These and other objects, features and advantages of the present invention will become apparent from the following detailed description of the preferred embodiment taken in conjunction with the accompanying drawings, throughout which like reference numerals designate like elements and parts.

BRIEF DESCRIPTION OF THE DRAWINGS

Fig. 1 is a schematic diagram showing one example of a rotary head assembly used in this invention;

Fig. 2 is a schematic diagram showing one example of a recording track pattern formed by the rotary head assembly shown in Fig. 1;

Fig. 3 is a schematic diagram showing one example of a recording track pattern to which the present invention is applied;

Figs. 4A and 4B are respectively schematic diagrams used to explain the recorded state on a tape;

Fig. 5 is a block diagram showing an embodiment of the recording system of a PCM audio signal recording and/or reproducing apparatus according to this invention;

Figs. 6A to 6G are timing charts respectively used to explain the operation of the apparatus shown in Fig. 5; and

Fig. 7 is a flow chart used to explain the operation to record a program by using a timer (timer scheduled recording).

DESCRIPTION OF THE PREFERRED EMBODIMENT

Referring now to the drawings, one embodiment of a PCM audio signal recording and/or reproducing apparatus according to this invention will hereinafter be described in detail. In the embodiment below, a signal to be recorded is an audio signal and this audio signal is recorded in the timer scheduled recording mode by a so-called 8 mm video tape recorder which can also be used as a PCM audio tape recorder.

Firstly, such 8 mm video tape recorder constructed as mentioned above will be described.

The 8 mm video tape recorder can employ, in addition to the recording mode in which an audio signal is frequency-modulated, mixed with a color video signal and then recorded under the state that the audio signal can be separated from the color video signal in a frequency standpoint, such a recording mode as an option that this audio signal is pulse-code-modulated and recorded on an area separate from that of the color video signal and both the signals form one track.

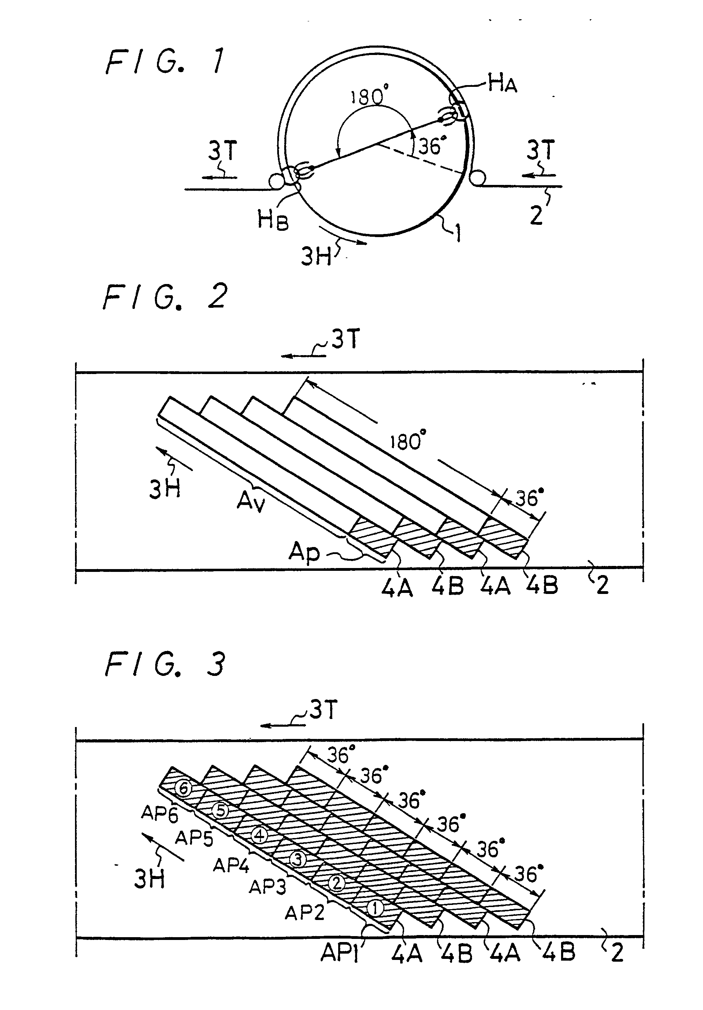

Fig. 1 shows an example of a rotary head assembly of the 8 mm video tape recorder and Fig. 2 shows a tape format thereof.

In Fig. 1, reference letters HA and HB represent recording and reproducing rotary magnetic heads, respectively. These rotary magnetic heads HA and HB are arranged to have operation gaps having different azimuth angles from each other and are mounted on a rotary drum 1 with an angular spacing of $180°$ therebetween. These rotary magnetic heads HA and HB are rotated at a frame frequency (30 Hz) in the direction shown by an arror 3H under the state that they are protruded slightly from the peripheral surface of the rotary drum 1. Then, a magnetic tape 2 is wrapped around the peripheral surface of the rotary drum 1 over an angular spacing larger than $216°$ and is transported at a constant speed in the direction shown by an arrow 3T.

Accordingly, on the tape 2, there are alternately formed tracks 4A and 4B having a length corresponding to 216° by the rotary heads HA and HB as shown in Fig. 2, on which a signal is recorded. On an area AP of each track having an angular spacing of about 36° (including a margin used for recording a PCM audio signal in the after-recording mode and a guard band) calculated from a time point at which the rotary heads HA and HB start scanning the tracks 4A and 4B, there is recorded an audio signal relating to one field period of the video signal under the state that it is pulse-code-modulated and time-compressed. On a succeeding area AV of each track having an angular spacing of 180°, there are recorded a color video signal of one field period, an FM (frequency modulated) audio signal and a tracking signal, respectively.

As described above, the PCM audio signal can be recorded and reproduced by the 8 mm video tape recorder. Therefore, taking a particular notice of such aspect, there has been proposed a technology (see U.S. Patent NO. 4,542,419 issued on Sept. 17, 1985) in which the recording area AV of the color video signal is also used as the recording area of the PCM audio signal and the 8 mm video tape recorder can be used also as a PCM audio signal recording and/or reproducing apparatus.

Specifically, since the area AV having the angular spacing of 180° in which the video signal and the like are recorded has a length five times as long as the PCM area AP having the angular range of 36°, the area AV is divided equally by 5 in which as shown in Fig. 3, in addition to the track area AP1 (shown by ①) of the original PCM audio signal, there are provided 5 divided track areas AP2 to AP6 shown by ② to ⑥ per one track 4A or 4B, respectively. Then, on and/or from each of these 6 divided track areas APL to AP6, there is recorded and/or reproduced the PCM audio signal of one channel, that is, the PCM audio signal of one field period with its time base compressed.

Accordingly, in this case, since the audio signal of one channel can be recorded and/or reproduced at the unit of each area, the audio signals of 6 channels can be recorded and/or reproduced, resulting in a recording time (capacity) six times as long as the prior art recording time.

In this case, if it is considered that the recording and/or reproducing is carried out at every segment track area, the PCM signal processing circuit used therefor may be a signal processing circuit for processing a signal of one channel which is used in the prior art 8 mm video tape recorder.

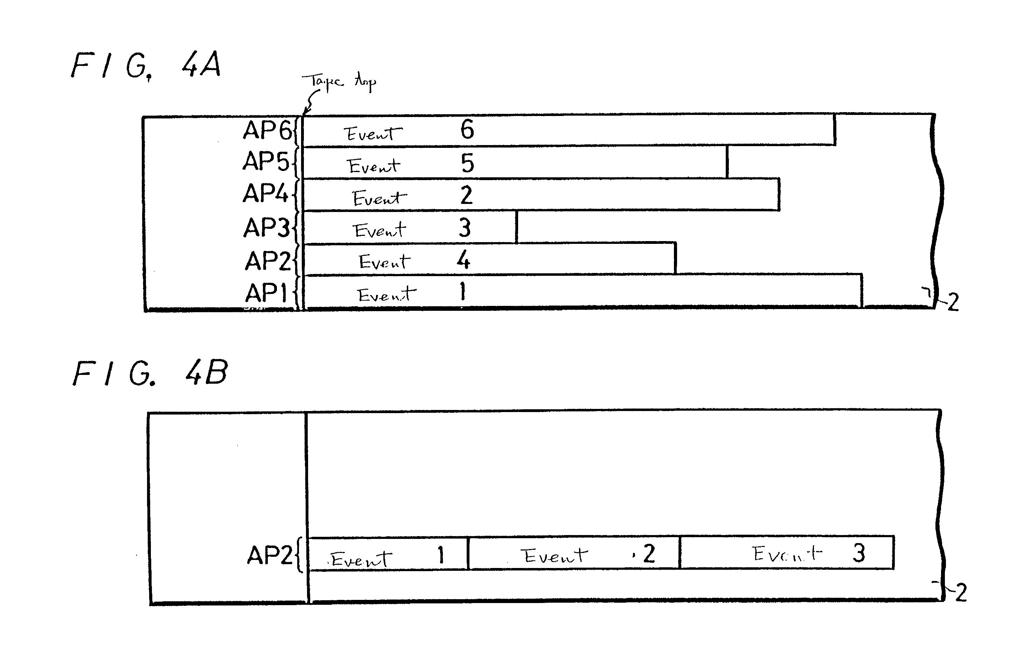

When the 8 mm video tape recorder as mentioned above is used as an audio tape recorder, if one segment track area of each channel is taken into consideration, the series recording becomes possible at every channel. For example, if the area AP2 is taken into consideration, different events 1, 2 and 3 are sequentially recorded as shown in Fig. 4B.

On the other hand, if the segment track areas AP1 to AP6 of the plurality of channels are all taken into consideration, 6 events 1, 2, 3, 4, 5 and 6 are sequentially recorded, for example, on the areas AP1 to AP6 as shown in Fig. 4A, thus a parallel recording being made possible.

Of course, in this case, regardless of the video signal recording and/or reproducing apparatus, the present invention may be constructed as a PCM audio tape recorder which is capable of recording and/or reproducing only an audio signal.

The timer scheduled event done by this apparatus will be described next.

First, the operation procedure of how to schedule the program by the timer will be described.

To set the timer scheduled event recording, a timer set button is depressed first to place the apparatus in the timer scheduled event recording mode. In this case, as the recording mode that can be made by the timer scheduled recording, there are three recording modes: the above mentioned parallel recording of the PCM audio signal; the series recording thereof; and the normal recording mode of the 8 mm video tape recorder to record the video signal and the PCM audio signal. If the 8 mm video tape recorder is used as the audio tape recorder, the video signal recording and/or reproducing mode is not available in such audio tape recorder.

Therefore, a desired recording mode is selected by switching a recording mode change-over switch which will be mentioned later.

In this case, in the timer scheduled event recording mode, if the recording mode change-over switch is changed-over from the present position to other position, the contents of the events scheduled by the timer before and stored in a memory are all erased.

If the normal recording mode is selected, the segment track area is determined as the area AP1 and other areas can not be specified. In the parallel recording mode, an arbitrary segment track area can be specified at every event. That is, a plurality of any channel tracks of the segment areas AP1 to AP6 can be specified.

On the other hand, in the series recording mode, although an arbitrary one segment track area can be specified, a different track area can not be specified at every event. In other words, a plurality of events are recorded on only the channel of, for example, the segment track area AP3.

After one of these three modes is scheduled and selected by the timer, to change the selected mode to other mode (for example, the parallel audio signal recording mode is scheduled till a certain time and then the normal video recording mode is scheduled until a next certain time, etc.) can not be carried out in principle because the operation of the user becomes very complicated.

When the timer scheduled recording mode is selected, a data indicative of one recording mode selected from the above mentioned three modes is stored in the memory and also the event NO. (number) is indicated on the display section of the timer section. In the timer of this kind, the event NO. is determined in response to the number of events (programs) that can be scheduled and the address of the memory of the timer is determined at every event; NO.. In that address, there are stored items to be set, such as, scheduled time, recording time, broadcasting channel of TV and so on.

The event NO. can be changed manually. When the event NO. is determined, the segment track channel NO. of the item to be set next is determined next and the channel NO. of the segment track is indicated on the display section of the timer section.

While in the parallel recording mode the track channel NO. is changed at every event as described before, in the series recording mode, this track channel NO. selected with respect to the first event is not changed thereafter. Further in the normal recording mode, only the NO.1 indicative of the area AP1 is indicated.

Then, the day and the time of the event are set and thereafter, the time that the event is ended is set. As described above, the timer scheduled event recording operation of one event is ended. In like manner, the plurality of events will be set by the timer scheduled event recording system.

Specifically, when the parallel recording mode is selected, the event NO. is selected and then changed. Also, the segment track channel NO. is selected and then changed. Thereafter, the timer scheduled recording time and so on are set. When the series recording mode and the normal recording mode are selected, the event NO. is changed and then the segment track channel NO. is indicated on the display section of the timer section. Thereafter, the segment track NO. is not changed and the operation step is moved to the next step in which the timer scheduled recording time is set.

The operaiton of the timer sheduled recording system with respect to the plurality of events that are scheduled by the timer will be described next.

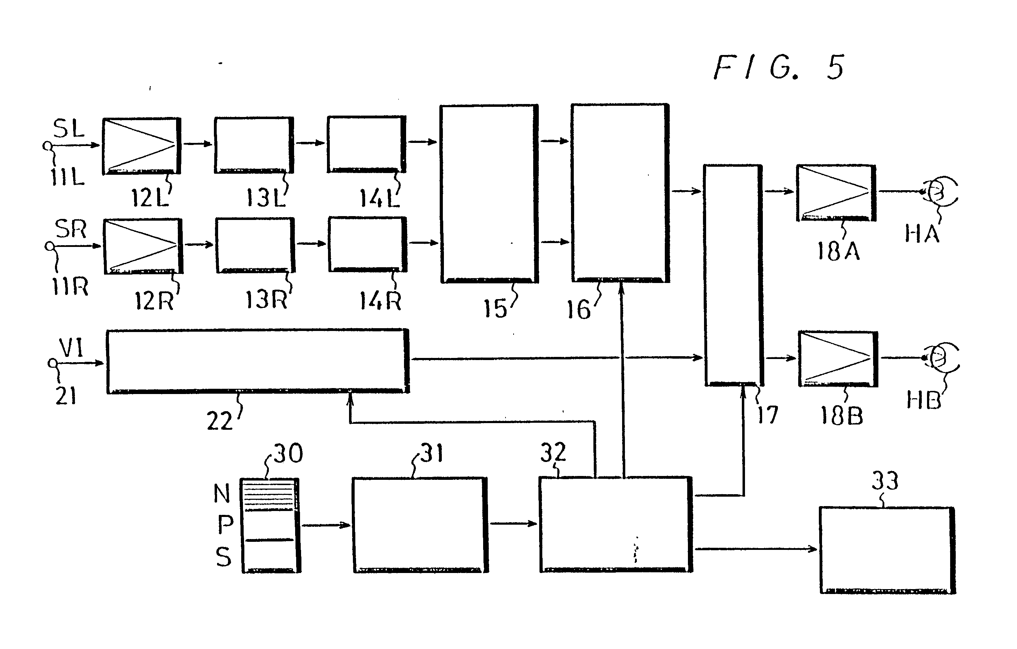

Fig. 5 shows an example of a recording system of the 8 mm video tape recorder.

Referring to Fig. 5, left and right audio signals SL and SR applied to input terminals 11L and 11R are supplied to amplifiers 12L and 12R, respectively. The output signals from the amplifiers 12L and 12R are supplied through band-limiting low pass filters 13L and 13R and noise reduction circuits 14L and 14R to an A/D (analog-to-digital) converter 15 in which they are converted to digital signals. The digital signals from the A/D converter 15 are supplied to a PCM processor 16 in which the audio signal data of one field period is time-compressed to a signal of one segment area, subjected to the addition of the error correction code and the 10/8 bit-conversion, and so on. Thereafter, it is read out from the PCM processor 16 on the basis of a read control signal derived from a timing signal generating circuit 32 and then supplied to a switching circuit 17.

Whereas, a video signal VI is supplied through an input terminal 21 to a video signal processor 22 in which the luminance signal is frequency-modulated and the carrier chrominance signal is low-frequency-converted. Then, the composed signal of the FM luminance signal and the frequency converted carrier chrominance signal is supplied to the switching circuit 17.

The switching circuit 17 is controlled in its switching operation by the switching signal and a gating signal from the timing signal generating circuit 32. Accordingly, the output signal of the video signal processor 22 or the output signal read out from the PCM processor 16 is supplied through amplifier 18A or 18B to rotary heads HA and HB.

Though not shown in detail, within the PCM processor 16 and the video signal processor 22, an ID (identification) pilot signal for judging whether or not the recording track pattern is recorded on the normal video mode or the multi PCM mode and a pilot signal for the tracking of the rotary heads HA and HB are composed and these pilot signals are suitably used in the playback mode.

The timing signal generating circuit 32 is supplied with a signal from a timer micro-computer 31 so that in the timer operation mode, a control signal corresponding to the command issued from this timer micro-computer 31 is generated from the timing signal generating circuit 32. This control signal is also supplied to a system controller 33 by which in the timer operation mode, various operations, such as the rewinding operation, stop operation, and so on of the apparatus are controlled.

A recording mode change-over switch 30 is provided to select the normal recording mode at the change-over position shown by N, the parallel recording mode at the change-over position shown by P and the series recording mode at the change-over position shown by S. The recording mode signal from this recording mode change-over switch 30 is supplied to the timer micro-computer 31 in which in the timer scheduled event recording mode, such recording mode signal is stored in the memory thereof. In the memory of the timer micro-computer 31, there are stored the above mentioned timer scheduled setting items.

Subsequently, the operation of the timer scheduled event recording mode will be described.

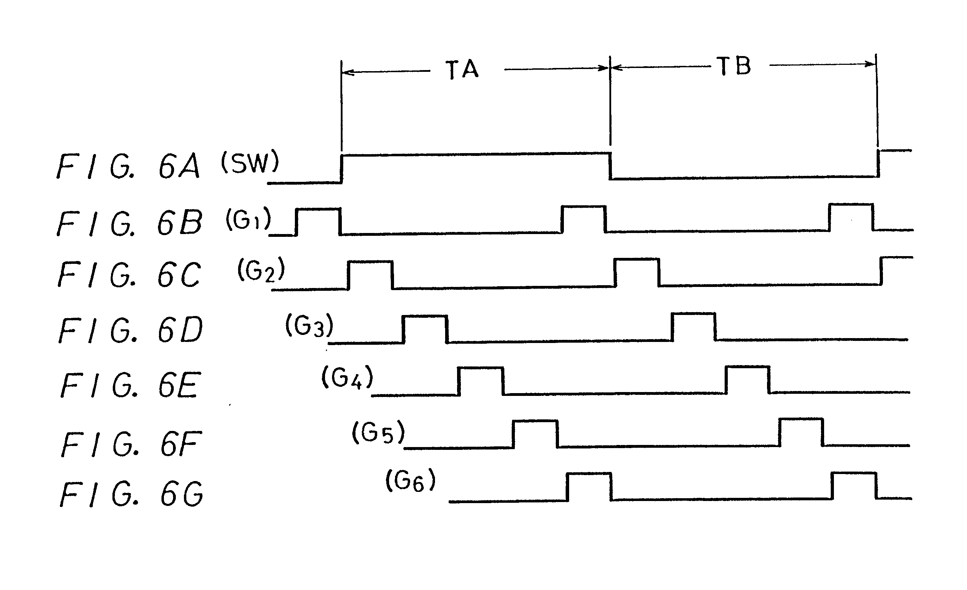

In the normal recording mode, when a time becomes the time set by the timer, each circuit section shown in Fig. 5 is powered and a signal SW (Fig. 6A), which inverts its state at every periods TA and TB in which the rotary heads HA and HB scan the area AV on the tape, is supplied from the timing signal generating circuit 32 to the switching circuit 17. As a result, the video signal from the video signal processor 22 is distributed to the two rotary heads HA and HB and thereby the video signal of one field period is sequentially recorded on the area AV.

From the timing signal generating circuit 32, there is also generated a signal G1 (Fig. 6B) which becomes "1" when the rotary head, which does not scan the area AV, scans the area AP1. This signal G1 is supplied to the switching circuit 17. Also, during the period in which this signal G1 becomes "1", a control signal used to read out the time-compressed PCM audio signal is generated from the timing signal generating circuit 32. This control signal is supplied to the PCM processor 16, whereby the PCM audio signal is supplied to the rotary head which scans the area AP1. As a result, with respect to the tape 2, the video signal is recorded on the area AV, while the PCM audio signal is recorded on the area AP1.

When the event time is ended, the recording and/or reproducing apparatus is placed in the stop mode and then in the recording standby mode.

When the time becomes the starting time of the next event, the video signal and the PCM audio signal are recorded in the timer scheduled event recording mode similarly as described above.

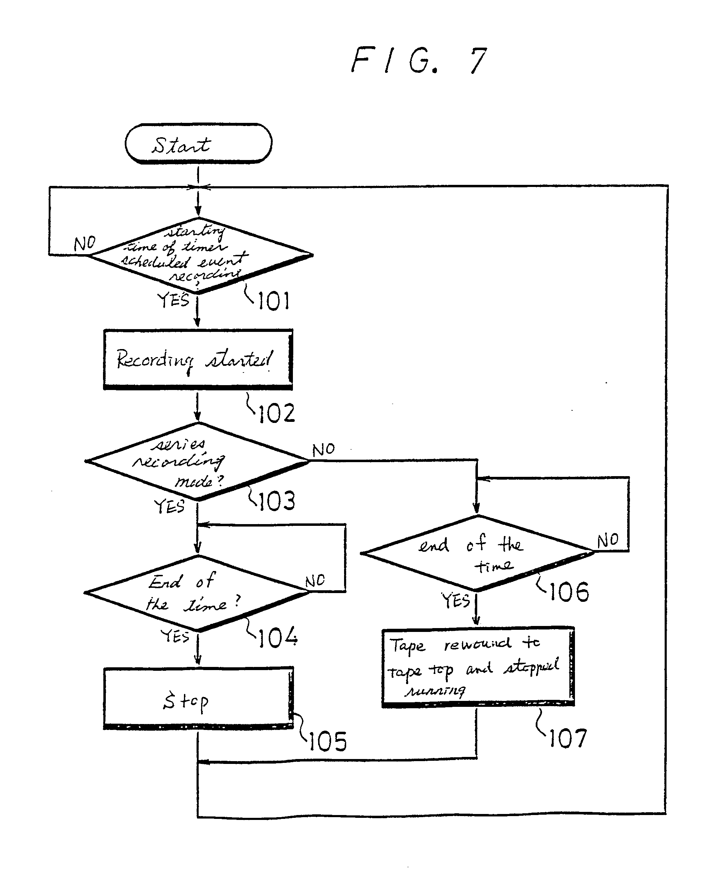

The operations of the timer micro-computer 31 and the like in a case where the timer scheduled event recording of only the PCM audio signal is carried out, that is, the parallel recording and the series recording are carried out will be described with reference to a flow chart of Fig. 7.

Referring to Fig. 7, in both cases of the parallel recording mode and the series recording mode, if the starting time of the first event is judged (at step 101), the recording is started (at step 102). At that time, in response to the segment track area specified with respect to that event, the timing signal generating circuit 32 generates a signal which becomes "1" when the rotary heads HA and HB scan that segment track area. To be more concrete, with respect to the area AP1, the signal G1 (Fig. 6B); with respect to the area AP2, a signal G2 (Fig. 6C); with respect to the area AP3, a signal G3 (Fig. 6D); with respect to the area AP4, the signal GA (Fig. 6E); with respect to the area AP5, a signal G5 (Fig. 6F); and with respect to the area AP6, a signal G6 (Fig. 6G) are generated from the timing signal generating circuit 32, respectively. Any one of these signals G1 to G6 is supplied to the PCM processor 16 as the read control signal and to the switching circuit 17 as the gating control signal.

Accordingly, the recording of the PCM audio data is started on the segment area which is selected in the timer scheduled recording mode with respect to that event.

Next, in the timer scheduled event recording mode, whether or not the series recording mode is selected is judged from the contents stored in the memory of the timer micro-computer 31 (at step 103). When it is judged that the series recording mode is selected, the program goes to the next step 104 in which the recording is continued till the end of the time scheduled by the timer. When the recording time is ended, the control signal is supplied from the timing signal generating circuit 32 to the system controller 33 by which the tape 2 is stopped running (at step 105).

Thereafter, the program goes back to the step 101, and then the above mentioned operations are repeated. In other words, on the same track area as that of the preceding event, there is recorded a next event in succession to the preceding event. For example, if the track area is the segment track area AP2, the events 1, 2 and 3 are sequentially recorded on the track area AP2 as shown in Fig. 4B.

On the other hand, at step 103, if it is judged that not the series recording but the parallel recording is selected, the program goes to step 106 in which the recording is continued till the end of the time scheduled by the timer. When the recording time is ended, the control signal is supplied from the timing signal generating circuit 32 to the system controller 33 by which the tape 2 is rewound up to its tape top and then stopped running (at step 107).

Thereafter, the program goes back to the step 101 and then the above mentioned operations are repeated. In the case of the parallel recording mode, at step 102, any one of the signals G1 to G6 is supplied to the PCM processor 16 and to the switching circuit 17 from the timing signal generating circuit 32 in response to the segment track area specified by the timer with respect to the event which becomes ready for recording.

As described above, on the tape 2, there is recorded the PCM audio signal with the segment track area being changed at every event as, for example, shown in Fig. 4A.

According to the present invention as set forth above, since both the series recording mode and the parallel recording mode can be employed as the timer recording mode, if either of the series recording mode and the parallel recording mode is properly selected in response to the use, the video and audio sources, etc., it is possible to carry out the timer scheduled event recording which can effectively utilize the advantages of both the series recording mode and the parallel recording mode.

Further, according to the present invention, since all timer scheduled recording items set by a different recording system before can be erased only by switching the change-over switch which is used to select both the series recording mode and the parallel recording mode, there is then an advantage that the items with respect to the events to be scheduled can be set by the timer with great ease.

## Claims

1. A PCM audio signal and video signal recording and/or reproducing apparatus in which each of a plurality of recording tracks formed by a rotary head (1, HA, HB) scanning across a magnetic tape (2) is divided by an integer n greater than 1 in the longitudinal direction thereof to thereby form n track areas in each track corresponding to n channels, respectively, and in which an information signal can be recorded in and/or reproduced from each track area of each of said channels; said PCM audio signal and video signal recording and/or reproducing apparatus comprising:

timer means (32, 33) for scheduling starting and ending times for a plurality of successively occuring audio events, said timer means including memory means for storing data concerning said successively occuring audio events including said starting and ending times; and

means for selectively establishing one of a first audio recording mode in which said plurality of audio events are recorded temporally and spatially in series, between the respective scheduled starting and ending times, in track areas corresponding to only one of said n channels automatically, but are not recorded or specified in different track channel areas at any event, a second audio recording mode in which said audio events are recorded temporally in series and spatially in parallel automatically, between the respective scheduled starting and ending times, in track areas respectively corresponding to ones of said n channels which are different from each other and are all recorded from the top of the tape in said selected track areas, and a normal recording mode in which one audio event is recorded on only one of said channels and a video signal is recorded on the other channels of said n channels, **characterized in**

that said means for selectively establishing said recording modes are switch means (30) adapted to be changed-over among positions corresponding to said first, said second and said normal recording mode, said data previously stored in said memory means being erased in response to change-over of said switch means between said positions.

2. The PCM audio signal and video signal recording and/or reproducing apparatus of claim 1, **further characterized in** that a video signal (VI) is reproduced from a tape (2) in which a video signal is recorded on a plurality of areas in said audio signal segment area upon selection of the video signal reproducing mode.

## Revendications

1. Appareil d'enregistrement et/ou de lecture d'un signal d'audiofréquences MIC et d'un signal vidéo, dans lequel chacune de plusieurs pistes d'enregistrement formées par une tête rotative (1, HA, HB) assurant un balayage d'une bande magnétique (2) est divisée par un nombre entier n supérieur à 1 dans la direction longitudinale afin que n zones de pistes soient formées dans chaque piste et correspondent à n canaux respectivement, et dans lequel un signal d'information peut être enregistré sur chaque zone de piste de chacun des canaux et/ou lu sur chaque zone, l'appareil d'enregistrement et/ou de lecture d'un signal d'audiofréquences MIC et d'un signal vidéo comprenant :

une minuterie (32, 33) destinée à programmer les heures de début et de fin de plusieurs événements d'audiofréquences qui sont successifs, la minuterie comprenant une mémoire destinée à conserver des données concernant des événements d'audiofréquences qui apparaissent successivement, et comprenant les heures de début et de fin, et

un dispositif destiné à établir sélectivement un mode parmi un premier mode d'enregistrement d'audiofréquences dans lequel plusieurs événements d'audiofréquences sont enregistrés temporellement et spatialement en série, entre les heures respectives de début et de fin qui sont programmées, dans des zones de pistes correspondant à un seul des n canaux automatiquement, mais ne sont pas enregistrées ou spécifiées dans des zones différentes de canaux de pistes pour un événement quelconque, un second mode d'enregistrement d'audiofréquences dans lequel les événements d'audiofréquences sont enregistrés temporellement en série et spatialement en parallèle de manière automatique, entre les heures programmées respectives de début et de fin, dans des zones de pistes correspondant respectivement à n canaux qui sont différents les uns des autres, et sont tous enregistrés depuis le début de la bande dans les zones sélectionnées des pistes, et un mode d'enregistrement normal dans lequel un événement d'audiofréquences est enregistré dans un seul des canaux et un signal vidéo est enregistré dans les autres des n canaux,

caractérisé en ce que

le dispositif de commutation destiné à établir sélectivement les modes d'enregistrement est un dispositif de commutation (30) destiné à être commuté entre des positions correspondant au premier mode, au second mode, et au mode d'enregistrement normal, les données mémorisées antérieurement dans la mémoire étant effacées lors de la manoeuvre du dispositif de commutation entre ses positions.

2. Appareil d'enregistrement et/ou de lecture d'un signal d'audiofréquences MIC et d'un signal vidéo selon la revendication 1, caractérisé en outre en ce qu'un signal vidéo (VI) est lu sur une bande (2) sur laquelle le signal vidéo est enregistré sur plusieurs zones segmentées de signaux d'audiofréquences lors de la sélection du mode de lecture du signal vidéo.

**Patentansprüche**

1. Aufnahme- und/oder Wiedergabegerät für PCM-Audio- und -Videosignale, in dem jede von einer Mehrzahl von Aufnahmespuren, die von einem ein Magnetband (2) in Querrichtung abtastenden rotierenden Kopf (1, HA, HB) gebildet werden, in Längsrichtung durch eine ganze Zahl n, die größer ist als 1, unterteilt wird, um auf diese Weise in jeder Spur n Spurbereiche zu bilden, die n Kanälen entsprechen, wobei in bzw. von jedem Spurbereich jedes der genannten Kanäle ein Informationssignal aufgezeichnet und/oder wiedergegeben werden kann,

wobei das Aufnahme- und/oder Wiedergabegerät für PCM-Audio- und -Videosignale aufweist:

eine Zeitgebereinrichtung (32, 33) für eine Auflistung von Start- und Endzeitpunkten für eine Mehrzahl von nacheinander auftretenden Audioereignissen, wobei diese Zeitgebereinrichtung Speichermittel enthält zum Speichern von Daten, die die nacheinander auftretenden Audioereignisse betreffen, einschließlich der genannten Start- und Endzeitpunkte,

sowie Mittel zum selektiven Einstellen einer der folgenden Betriebsmoden:

- einem ersten Audio-Aufnahmemodus, bei dem die genannte Mehrzahl von Audioereignissen zwischen den betreffenden aufgelisteten Start- und Endzeitpunkten zeitlich und räumlich in Reihe in Spurbereichen automatisch aufgezeichnet werden, die nur einem der n Kanäle entsprechen, keinesfalls jedoch in Spurbereichen verschiedener Kanäle aufgezeichnet oder spezifiziert werden,

- einem zweiten Audio-Aufnahmemodus, bei dem die genannten Audioereignisse zwischen den betreffenden aufgelisteten Start- und Endzeitpunkten zeitlich nacheinander und räumlich parallel in Spurbereichen automatisch aufgezeichnet werden, die jeweils einem der n Kanäle entsprechen, die voneinander verschieden sind und sämtlich vom Anfang des Bandes an in den genannten ausgewählten Spurbereichen aufgezeichnet werden, und

- einem normalen Aufnahmemodus, bei dem ein Audioereignis in nur einem der genannten Kanäle und ein Videosignal in den anderen der n Kanäle aufgezeichnet wird,

**dadurch gekennzeichnet,**

daß die genannten Mittel zur selektiven Einstellung der Aufnahme-Betriebsmoden Schaltmittel (30) sind, die zwischen Positionen umschaltbar sind, die dem ersten, dem zweiten und dem normalen Aufnahmemodus entsprechen, wobei in den genannten Speichermitteln zuvor gespeicherte Daten als Reaktion auf das Umschalten der Schaltmittel zwischen den genannten Positionen gelöscht werden.

2. Aufnahme- und/oder Wiedergabegerät für PCM-Audio- und -Videosignale nach Anspruch 1, **dadurch gekennzeichnet,** daß bei der Wahl des Videosignal-Wiedergabemodus ein Videosignal (VI) von einem Band (2) wiedergegeben wird, auf dem ein Videosignal in einer Mehrzahl von Bereichen in dem Audiosignal-Segmentbereich aufgezeichnet ist.

FIG. 1

HA

180°

36°

3T

3T

HB

3H

1

2

FIG. 2

3T

180°

3H

Av

36°

Ap

4A  4B  4A  4B

2

FIG. 3

3T

36°

36°

36°

6

36°

AP6

5

36°

AP5

4

36°

3H

AP4

3

AP3

2

AP2

1

AP1

4A  4B  4A  4B

2

EP 0 206 255 B1

FIG. 4A

Tape top

| AP6 | Event 6 |
| AP5 | Event 5 |
| AP4 | Event 2 |
| AP3 | Event 3 |
| AP2 | Event 4 |
| AP1 | Event 1 |

2

FIG. 4B

| AP2 | Event 1 | Event 2 | Event 3 |

2

FIG. 5

FIG. 6A (SW)
FIG. 6B (G₁)
FIG. 6C (G₂)
FIG. 6D (G₃)
FIG. 6E (G₄)
FIG. 6F (G₅)
FIG. 6G (G₆)

# FIG. 7

```
                    ┌─────────────┐
                    │    Start    │
                    └─────────────┘
                           │
           ┌───────────────┼──────────────────────────────────────┐
           │               ▼                                        │
    NO     │      ╱ starting      ╲                                 │
  ◄────────┤     ╱ time of timer    ╲                               │
           │     ╲ scheduled event  ╱                               │
           │      ╲ recording      ╱  101                           │
           │            YES                                         │
           │             ▼                                          │
           │      ┌───────────────────┐                            │
           │      │ Recording started │                            │
           │      └───────────────────┘  102                        │
           │             ▼                                          │
           │         ╱ series ╲         NO                          │
           │        ╱ recording ╲──────────────────┐               │
           │        ╲  mode?    ╱                   │               │
           │         ╲        ╱  103                ▼               │
           │            YES                    ╱ end of the ╲   NO  │
           │    ┌────────┼──────────┐         ╱    time      ╲──────┤
           │    ▼        │          │         ╲              ╱      │
           │  ╱ End of ╲ │   NO     │          ╲           ╱  106   │
           │ ╱ the time? ╲──────────┘              YES              │
           │ ╲          ╱                           ▼               │
           │  ╲       ╱  104              ┌──────────────────────┐ │
           │    YES                        │ Tape rewound to      │ │
           │     ▼                         │ tape top and stopped │ │
           │ ┌──────────┐                  │ running              │ │
           │ │   Stop   │                  └──────────────────────┘ │
           │ └──────────┘  105                      107             │
           │     │                                   │              │
           └─────┴───────────────────────────────────┴──────────────┘
```